# EUROPEAN PATENT APPLICATION

(11) **EP 4 322 401 A1**
(43) Date of publication of application: **14.02.2024**
(21) Application number: 22189890.1
(22) Date of filing: 11.08.2022
(51) Int. Cl.: H02S 40/34

(54) **METHOD FOR PRODUCING A PHOTOVOLTAIC PANEL FOR A VEHICLE BODY WITH A CONNECTOR ATTACHED BY OVERMOLDING**

(71) Applicant: Sono Motors GmbH, 80935 München (DE)
(72) Inventor: HECKER, Carsten, 85560 Ebersberg (DE); SPYRA, Tim, 82069 Hohenschäftlarn (DE); RAMAKRISHNAN, Arun, 78467 Konstanz (DE); KAPP, Camillo, 80992 Munich (DE)
(74) Representative: Qip Patentanwälte Dr. Kuehn & Partner mbB

(57) **Abstract**

The present invention relates to a photovoltaic (PV) panel (422), in particular a PV panel for a vehicle body component, comprising a PV label and a connector placed on the PV label. The PV label comprises a solar cell arrangement enclosed by polymeric foils. The connector is configured for electrically connecting the PV panel and a wiring. A structure (424) is made by overmolding at least portions of the PV label neighbouring the connector as well as portions of the connector with a thermoplastic or thermosetting polymer and solidifying the thermoplastic or thermosetting polymer, the structure (424) serving in one as a support structure for mechanically supporting the PV label and as an attachment structure for attaching the connector to the PV label.

## Description

### FIELD OF THE INVENTION

The present disclosure relates to a method for producing a photovoltaic panel, for example a photovoltaic vehicle body panel. More specifically, the present disclosure relates to a method for producing a photovoltaic panel equipped with an electrical connector. The disclosure further relates to a photovoltaic panel equipped with a connector.

### TECHNICAL BACKGROUND

In the following, the term "photovoltaic" may be abbreviated by "PV". PV cells or panels may also be referred to as solar cells or panels.

Photovoltaic cells convert incident light into electrical energy. Typically, multiple photovoltaic cells are arranged in a photovoltaic panel or module. A solar panel typically has a planar, layered structure, where the solar cells are embedded within various layers for support, protection, and electrical interconnection of the cells. A solar panel requires at least one electrical connector for electrical connection of the panel with, e.g., other panels, batteries, etc. Such connector or junction box is glued onto a back-sheet of the panel, and a conductive tab of the connector is welded, soldered, clamped, clipped or the like to a conductor of an inner layer of the PV panel.

In earlier patent applications the present applicant has proposed approaches for providing PV cells at a body of a car for generating electricity to be supplied to the car, for example for charging a battery of an electric car. Specifically, methods have been proposed for providing solar cells integrated within a car body panel, i.e., within a carrier structure of the car body panel. The terms "car body panel" and "vehicle body panel" may be used interchangeably herein for sake of conciseness, wherein a vehicle is to be understood as covering any kind of vehicles such as cars, trucks, busses, mobile homes, trains, ships, airplanes, etc.

It is referred exemplarily to the applicant's earlier patent application DE 10 2022 101935 with further references given therein. Features and characteristics of the approaches discussed therein may also apply to the PV labels and PV car body panels and production methods described herein and the content of the earlier patent applications shall be incorporated in its entirety herein by reference.

The connector which is to provide for the electrical connection of the PV car body panel to a wiring harness of the car needs robust and reliable attachment in view of the vibrations and any kind of mechanical stresses occurring during driving, accelerating, decelerating, etc. The electrical contacts need to be protected against any kind of humidity, even splash water or a high pressure water jet.

Car body panels generally have three-dimensionally curved shapes, i.e. outer and inner contours. If solar body panels should be used as far as possible, the panel surface area where to attach the connector may also be generally non-planar. While one may consider connectors with specific curvature adapted to the curvature of one or more panels, this contradicts the requirement in automotive manufacturing of minimizing the number of parts and pieces, i.e., approaches requiring a single "standard" connector only would be preferable.

### SUMMARY OF THE INVENTION AND OF EMBODIMENTS

It is an object to propose an improved approach for attaching a connector to a photovoltaic panel, in particular a vehicle body panel, in terms of a mechanically rigid, robust, and reliable attachment. It is a further object to propose such approach with a view on a reliable sealing and protection of the electrical connection provided by the connector. It is further an object to propose such an approach which is suited for automotive manufacturing processes with specific requirements such as one or more of a minimum number of parts, short processing times, minimum number of process steps, and low costs. It is further an object to propose a photovoltaic vehicle body panel equipped with a connector which may be produced by such approach.

Such objects are met with the subject-matter of the independent claims. Advantageous embodiments are defined in the dependent claims, described in the following specification and illustrated in the accompanying figures.

According to a first aspect of the present invention, a method for producing a photovoltaic, PV, panel is proposed. The method comprises providing a PV label, wherein the PV label comprises a solar cell arrangement enclosed by polymeric foils. For example, the PV label may comprise the solar cell arrangement interposed between one or more of front side and back side polymeric foils which are provided for purposes of protection, stabilization, etc. A connector is placed on the PV label. The connector is configured for electrically connecting the PV label and a wiring, such as a wiring harness of a vehicle.

Next, an attachment structure for attaching the connector to the PV label is provided by applying a mold material to the PV label and the connector placed on the PV label. The applied mold material is solidified to thereby provide the PV label with the attached connector.

The mold material may comprise a mouldable thermoplastic or thermosetting polymer. A thermoplastic material is understood herein as a material which becomes reversibly plastic or viscous when heated to elevated temperatures. A thermosetting material is understood as a material which irreversibly hardens upon chemical reaction of two components. Such curing may also be promoted by radiation, in particular, UV radiation, and/or heat.

The mold material is applied such that at least portions of the PV label neighbouring the connector as well as portions of the connector are overmolded with the mold material. The term "overmolding" is generally understood herein in a geometrical or spatial sense as referring to a process of applying a mold material to both, the PV label and the connector, more specifically neighboring parts of PV label and connector, wherein "over"-molding means that a common or continuous layer of mold material covers the neighboring parts of PV label and connector.

Placing the connector on the PV label can comprise placing a contact part of the connector on a contact area of the PV label. The contact area can be an area specifically prepared for placing and/or attaching the connector. For example, the contact area can comprise an exposed electrically conducting contact point of the solar cell arrangement. Such contact point can comprise a blank copper, Cu, or tinned Cu contact of a flat cable, ribbon cable, ribbon conductor of the solar cell arrangement. As another example, a printed circuit board, PCB, can be provided embedded within the PV label and can provide the contact point. Such PCB can be laminated within the PV label, e.g., on top of a ribbon conductor, in a previous process.

Optionally, a surface portion of the label which is intended to be flat after the solidification of the thermoplastic or thermosetting polymer can be selected as the contact area.

Placing the connector on the PV label may comprise positioning the connector based on one or more positioning portions provided at the contact part and/or the PV label. Such positioning portions or structures can implement a poka-yoke mechanism for ensuring a desired or intended (correct) positioning of the connector at the PV label. For example, any kind of protrusions such as pins or rims, and/or any kind of recesses such as notches, nuts, combinations thereof, can be provided at the contact part resp. contact area with complementary structures at the contact area resp. contact part. As another example, the contact area can comprise a frame or other guiding structure or structures for correct positioning of the connector. Such guiding structures can be molded onto a back-sheet of the PV label in or around the contact area in a previous process.

Placing the connector on the PV label can comprise gluing the connector on its place on the contact area. For example, a pre-fixing adhesive foil can be provided at one or both of a base of the contact part of the connector and the contact area of the PV label. As another example, glue can also be provided to the contact part, e.g., to glue holes thereof, before or after the connector is put in place onto the PV label.

The production process can comprise electrically connecting, by soldering, welding, clamping, clipping, or the like, at least one conducting contact tab of the contact part of the connector to the contact point of the PV label. Soldering, welding, clamping, clipping, etc. may generally comprise any kind of soldering, welding, etc. unless explicitly discussed otherwise.

Subsequent to electrically connecting the at least one contact tab to the contact point, a potting material and/or a cover can be provided for protecting and/or sealing the electrical connection of the PV panel and (with) the connector. For example, the contact part can provide an opening, aperture or through-hole for soldering or welding the at least one tab after the contact part has been placed at the PV label. Such through-hole may be filled, closed and/or covered by the potting material. Additionally or alternatively, the protective cover protects and seals the though-hole. As an example, the cover can include a pre-assembled sealing.

A fixation tool can be used for placing the connector on the PV label and/or keeping the connector in place (correctly positioned) during subsequent steps of applying and/or solidifying the mold material. For example, such tool can keep the connector in place when the mold material is applied and/or solidified in a mold tool.

Applying the mold material to the contact part can comprise that the mold material is applied to one or more edges of the contact part. For example, the contact part may be in contact with the PV label by means of a socket or base such as a base plate, base frame, combinations thereof, etc., and edges thereof may have the mold material applied thereto such that said edges are covered at least partly, including that at least portions of an edge are covered and/or the edge is covered to some height above the PV label. It is important to note that in many embodiments, overmolding is intended, amongst others, to also contribute to reliably sealing the electrical connection at the contact point in terms of, for example, preventing the ingress of humidity, moisture, etc.

Overmolding the PV label and the connector placed on the PV label can comprise that at least portions of a step or steps of the connector are overmolded. As a particular example, a stepped (or undercut) base of the contact part may have covered the, e.g., lowest, step thereof (or the undercut filled) by the mold material.

The mold material can also be applied to the protective cover if present. For example, the mold material can be applied to edges of the protective cover which are in direct contact with (placed upon) the contact area. According to other examples, the mold material is applied to or spread over large parts of the protective cover, up to the entirety of the cover, i.e., the protective cover is overmolded fully or in parts.

Solidifying the applied mold material can comprise thermal fusion of the mold material, preferably a thermoplastic polymer, and a material of the connector. For example, the connector can comprise a thermoplastic material suitable for thermal fusion with the thermoplastic polymer of the mold material. According to various examples, the connector can be an injection molded part with a pre-assembled at least one contact tab, and the connector is then overmolded by one of the processes described herein. The protective cover if present can be of any material, preferably a thermoplastic polymer suitable for thermal fusion with a thermoplastic polymer of the mold material. Various examples can comprise that a primer is applied to the contact area, the contact part and/or the protective cover prior to applying the mold material, to further support attaching the connector to the PV label. As a specific example, a primer can contribute to chemically fusing / adhering a thermoplastic and a thermosetting material. According to embodiments, if a primer is considered not heat stable enough, a thermosetting material can be used as the mold material, to avoid overmolding with typically very hot thermoplastic materials. According to embodiments, the step of providing an attachment structure for attaching a connector is performed in one step together with or embedded within a step of providing a support structure for mechanically supporting the PV label.

The approach of providing the support structure and the attachment structure in one step can comprise applying a mold material to the PV label and the connector placed on the PV label and solidifying the mold material. Preferably, the approach comprises overmolding the PV label and the connector placed on the PV label by applying a thermoplastic or thermosetting polymer, and solidifying the thermoplastic or thermosetting polymer.

Embodiments further comprise shaping the PV label, using a mold tool, into a desired three-dimensional shape. Upon solidifying the thermoplastic or thermosetting polymer, the structure formed upon solidifying the thermoplastic or thermosetting polymer is removed together with the PV label and the connector from the mold tool. Thereby, the PV panel with attached connector is provided.

According to a third aspect of the present disclosure a PV panel is provided. The panel comprises a PV label having a solar cell arrangement enclosed by polymeric foils. A connector is placed on the PV label, the connector being configured for electrically connecting the PV panel and a wiring. A structure serves in one as a support structure for mechanically supporting the PV label and as an attachment structure for attaching the connector to the label resp. panel. The structure is made by solidified mold material such as a thermosetting or thermoplastic polymer. Specifically, the structure can be made by overmolding at least portions of the PV label neighbouring the connector as well as portions of the connector with the mold material and solidifying the mold material, such that the resulting structure is a continuous, coherent or uniform structure covering the neighbouring portions of the PV label and the connector.

The PV panel can be a vehicle body panel for a body of a car or other vehicle. The PV panel can have a two- or three-dimensionally curved shape with accordingly curved inner and/or outer surfaces. For example, a front or outer surface of the panel may be curved, and/or a back or inner surface of the panel (and/or the label) may be curved into one or more directions. The connector can be attached to the back or rear surface of the panel. According to various embodiments, the PV panel is produced by any of the methods according to the second aspect outlined hereinabove.

It is to be noted that various features and advantages of embodiments of the invention are described herein partly with respect to a method of producing a PV panel and partly with respect to a PV panel producible with such method. One skilled in the art will recognize that the features may be suitably transferred from one embodiment to another and features may be modified, adapted, combined and/or replaced, etc. in order to arrive at further embodiments.

### BRIEF DESCRIPTION OF THE DRAWINGS

In the following, advantageous embodiments of the invention will be described with reference to the enclosed drawings. However, neither the drawings nor the description shall be interpreted as limiting the invention.
Figs. 1(a)-(c) illustrate processing steps for producing a PV panel in accordance with an embodiment of the present disclosure.
Fig. 2 is a perspective view of the connector mounted in the process according to Figs. 1(a)-(c).
Fig. 3(a)-(e) illustrate processing steps for producing a PV panel in accordance with another embodiment of the present disclosure.
Fig. 4(a)-(c) illustrate processing steps for producing a PV panel in accordance with still another embodiment of the present disclosure.

The figures are only schematic and not to scale. Same reference signs refer to same or similar features.

### DESCRIPTION OF PREFERRED EMBODIMENTS

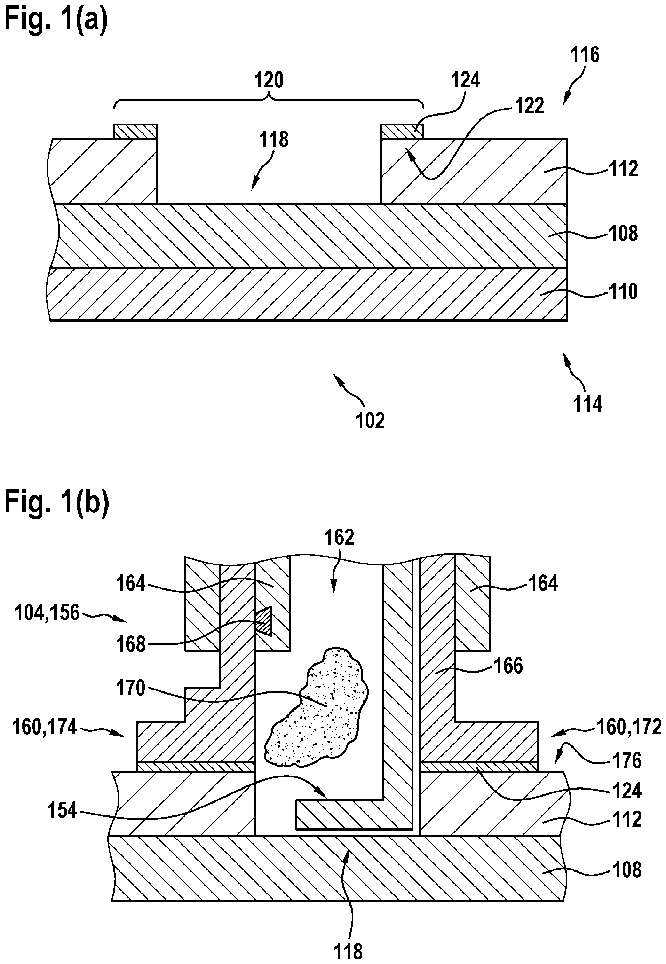

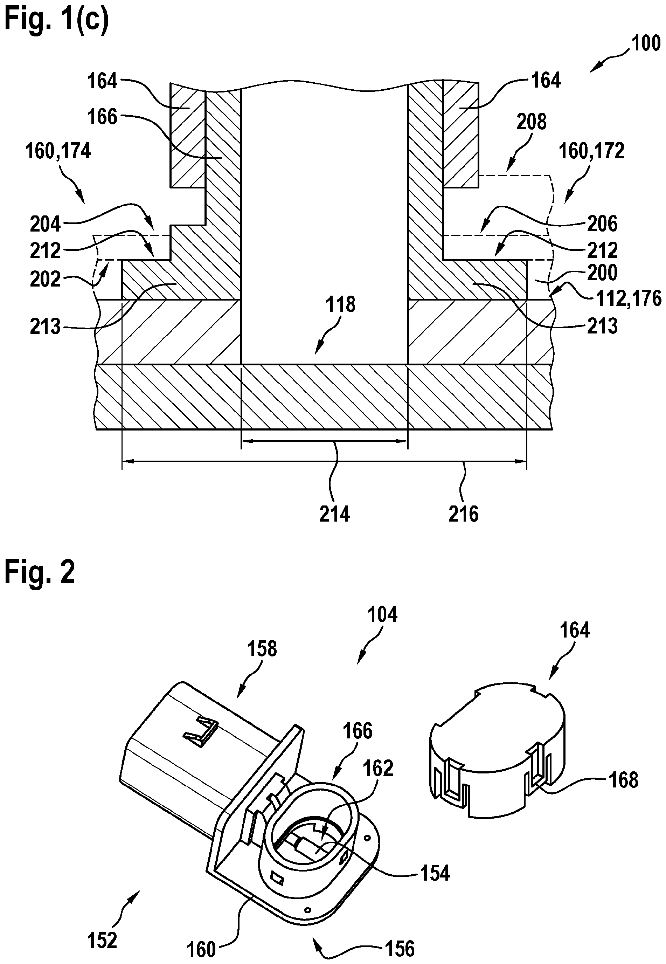

The sequence of Figs. 1(a)-(c) schematically illustrates a process of producing a photovoltaic, PV, panel in accordance with an exemplary embodiment. Specifically, a PV label 102 is provided and prepared, Fig. 1(a), a connector 104 is placed on the PV label 102, Fig. 1(b), and an attachment structure is provided, as discussed below with reference to Fig. 1(c), where the attachment structure also serves as a support structure for the PV label 102 to thereby provide the PV panel.

Referring to Fig. 1(a), the PV label 102 comprises a solar cell arrangement 108, a front side foil 110 and a back side foil 112. It is noted that any foil, sheet or layer (these terms being used interchangeably herein) discussed herein can be comprised of two or more foils, except explicitly defined otherwise.

Generally, a "front side" 114 of the PV label 102 (or the later PV panel) is that side of the panel from which it is intended that light be incident onto the solar cells. In case the PV label 102 is to be used in a car body, the front side 114 is the outside of the car body panel. Accordingly, a "back side" or rear side 116 is directed away from the incident light resp. to the interior of the car or vehicle.

The solar cell arrangement 108 of PV label 102 is illustrated in the figures and referred to in the description in simplified form as a "copper layer" or Cu-layer, as the property of the solar cell arrangement which is particularly relevant for the present disclosure comprises that a back side of the solar cell arrangement 108 comprises one or more conductors, such as typically flat cables, ribbon cables, ribbon conductors, etc.

More specifically, each solar cell comprises electric contacts, and as a typical solar cell arrangement comprises multiple solar cells, the electric contacts thereof are interconnected via electrical connections which may be comprised of one or more electrically conducting ribbons and/or one or more copper solderings between adjacent photovoltaic cells. Use of shingle modules is also contemplated. Shingle modules consist of narrow solar cell strips that are connected to form strings using electrically conductive adhesives. The individual solar cells overlap slightly.

The solar cell arrangement 108 in Fig. 1(a) further comprises a contact point 118 which is exposed to the outside of label 102. Via contact 118 the solar cell arrangement 108 can be connected to external electric circuitry, as discussed below.

The solar cell arrangement 108 is generally encapsulated between foils 112 and 110, i.e., the solar cells, electrical interconnections and possibly other components of solar cell arrangement 108 are embedded within said encapsulation. According to one specific example, the encapsulation foils may comprise lamination foils, wherein a front side polymeric lamination foil 110 and a back side polymeric lamination foil 112 enclose the plurality of solar cells 108 from opposite sides. Typically, foils 110, 112 may comprise a thermoplastic polymer such as EVA (Ethylene Vinyl Acetate) or POE (Polyolefin Elastomer).

According to a further example, the solar cell arrangement 108 can additionally or alternatively be reinforced by one or more stabilisation foils to form the PV label 102. Foil 110 may thus comprise a front side polymeric stabilisation foil and/or foil 112 may comprise a back side polymeric stabilisation foil. According to specific embodiments, the PV label may not necessarily comprise a rear side polymeric stabilisation foil. The polymeric stabilisation foils may comprise a thermoplastic material, such as polycarbonate (PC), polyethylenterephthalat (PET), polyamide (PA), polyetheretherketone (PEEK), Acrylonitrile butadiene styrene (ABS), polymethyl methacrylate) (PMMA), polyvinylchlorid (PVC), or any combinations thereof.

It is noted that further layers may be provided on the front side 114 of PV label 102, i.e., may be formed during production of the PV label 102 either in previous processing and/or during or after any of the production processes discussed herein. For example, such layers may comprise one or more protection layers serving as protection against UV radiation, scratching, etc.

The PV label 102 is prepared for the present production process by exposing the contact point 118 in a contact area 120. Specifically, the contact point 118 may comprise a blank copper contact, a tinned copper contact, a PCB, etc. Although not illustrated in Fig. 1(a), any kind of solder material, solder alloys, etc. may also be applied as a preparation for a soldering step.

The contact area 120 on the back side 116 of PV label 102 may designate the exposed contact point 118 and a surrounding surface area 122 of back side foil 112 which may comprise an area where the connector 104 (see below) is to be attached. Generally, the contact area 120 is the area on the PV label which is involved in, e.g., prepared for, placing, optionally positioning, the contact part on the PV label. For example, the contact area may correspond to a footprint (area) of the contact part, e.g., a base thereof, on the PV label, i.e. the area where the base and the PV label are in touch when the connector is placed on the PV label (allowing for tolerances such as small gaps between the PV label and the connector, as discussed elsewhere herein). However, it is to be noted that the contact area may extend further than a footprint of a base of the contact part, for example in case the PV label provides positioning structures such as a frame for correct positioning of the contact part.

In one example, the contact area 120 may be prepared, as exemplarily illustrated in Fig. 1(a), by providing a pre-fixing adhesive foil 124. Other preparatory measures may comprise providing pins or notches in the contact area 120 for correct positioning of the connector 104.

Next, the connector 104 will be described with reference to Fig. 2 in more detail, where reference will also be made to the PV label 102 of Fig. 1(a) for ease of understanding, while the connector 104 placed at contact area 120 of PV label 102 will be described with reference to Fig. 1(b).

Generally, the connector 104 may be understood as implementing a 'socket' or 'header' of the PV panel for electrical connection to, e.g., a car wiring. The connector 104 comprises a housing 152 and an integrated conductor, from which only one contact tab 154 is illustrated. The housing 152 comprises a contact part 156 configured for contacting the contact area 120 of PV label 102, as discussed further below. The housing 152 further comprises a connection part 158 configured for connecting to a connector of a wiring harness of a car.

The conductor of the connector 104 provides for electrical connection between contact part 156 and connection part 158. The conductor can be a single piece of metal including the tab 154. The contact tab 154 can be a flattened metal tab or strip, for example. According to other embodiments a connector can comprise two or more conductors and/or contact tabs.

The contact part 156 comprises a base 160 which is intended to serve as a contact portion to be in mechanical contact or in touch with the contact area 120 when the connector 104 is placed on the PV label 102. The term "mechanical contact" does not exclude one or more layers of adhesive and/or primer being arranged between base 160 and contact area 120, such as the adhesive foil 124 illustrated in Fig. 1(a).

A through-hole 162 of contact part 156 enables that contact tab 154 can be soldered or welded or otherwise be electrically connected to the electrical contact point 118 of the PV label 102 when connector 104 accordingly placed (and correctly positioned) on the PV label 102.

Connector 104 further comprises a protection cover or cap 164 for closing the through-hole 162 of contact part 156 after the tab 154 is electrically connected to the PV label 104. The contact part 156 comprises a protrusion 166 formed, in the present example, as a hollow shaft, pipe, stub, collar, fragments thereof, etc., over which to put or push the protection cap 164, to thereby close the through-hole 162 such that one or more of the functions of protecting / sealing the blank contact point 118, tab 154 and the connection therebetween from humidity, water, dust, corrosion, abrasion, any other kind of aging, etc. can be achieved. The protection cap 164 can be provided with a (pre-assembled) sealing material 168 for achieving one or more of the beforementioned functions.

The protection cap 164 can be configured removable (if not intended for being overmolded), which allows servicing the contact point 118. The protection cap 164 can be of any material, preferably polymer, more preferably a thermoplastic or thermosetting polymer in case the cover 164 is intended for thermal fusion with material of the attachment / support structure as discussed further below.

Additionally or alternatively, a potting material 170 (see Fig. 1(b)) can be provided prior to closing the through-hole 162 with the protective cover 164. According to another alternative, only one or more potting materials are provided for protective closure, where the protrusion 166 of contact part 156 would be configured for accepting the potting material/s, such as a thermoplastic or thermosetting material, and the protective cover is omitted.

With primary reference to Fig. 1(b), base 160 of connector 104 is shown as being in touch with contact area 120 of PV label 102. Specifically, base 160 is placed on adhesive tapes 124. Alternatives for pre-fixing connector 104 can be contemplated, such as the application of glue to one or both of touching surfaces of base 160 and the contact area 120, or combinations thereof. It is generally noted that pre-fixing, if any, of the contact part 156 to contact area 120 may be accomplished prior to or after a, for example, soldering or welding of tab 154 to contact point 118.

Base 160 as vertically extending in Fig. 1(b) from the plane of rearward surface 176 of PV label 102 at contact area 120 can be stepped, such as can be single-stepped 172 or can be multi-stepped 174 along at least portions of its (preferably, outer) circumference. Combinations and alternatives can be contemplated, for example, the base can be provided, at least portion-wise, with an undercut.

Placing the contact part 156 on contact area 120 is understood to imply that the at least one contact tab 154 comes into mechanical contact with contact point 118, e.g., due to mechanical pre-tension, or at least is arranged for such mechanical contact being established when, for example, a soldering or welding tool is used for soldering or welding contact tab 154 and contact point 118. Accordingly, the at least one tab 154 can be soldered (any type of soldering) or welded (e.g., resistance welding, gap welding, etc.) directly to the contact point 118. While not illustrated in Figs. 2 or 1(b), according to one example, solder bumps can be provided at one or both of contact point 118 and tab 154, one or both can be tinned, applied with electrically conductive epoxy adhesives capable for soldering, etc.

After soldering or welding or otherwise provisioning of the electrical connection between contact point 118 and tab 154, the connection can optionally be sealed by the potting material 170. Thereafter the cover 164 can be pushed over stub 166.

Fig. 1(c) illustrates options for applying a mold material 200 to the configuration of PV label 102 and connector 104 as of Fig. 1(b). The various options are indicated by dashed lines in Fig. 1(c). Moreover, some features of the configuration of Fig. 1(b) are omitted in Fig. 1(c), and the description of Fig. 1(b) may therefore accordingly be referred to.

The mold material 200 may for example comprise a thermoplastic or thermosetting polymer. The mold material 200 can be applied or filled into, for example, a mold tool, in a viscous condition. The mold material 200 may be applied to the contact area 120, specifically surface 176 of PV label 102 (rearward surface of foil 112).

According to one option, the mold material may be applied in a layer 202 up to a height (or less) of a step 213 of a single-stepped portion 172 of base 160, or up to a height (or less) of a first step 213 of a multi-stepped portion 174 of base 160, such that base 160 is enclosed or framed by the mold material 200. Gaps, bubbles, voids or unfilled cavities between the mold material 200 and the base 160, i.e. a seamless contact between both can be relatively easily be achieved in this configuration.

According to another option, the back side 116 of label 102 (at least a portion of back side 116 which is neighboring base 160) and portions of the base 160 may be overmolded. Specifically, the mold material 200 may be applied up to more than the height of the (first) step 213 of base 160. For example, a layer 204 may come in touch with a further step of multi-stepped 174 base 160, or a layer 206 may come in touch with other portions of contact part 156, such as protrusion 166, or combinations thereof. From Fig, 1(c) it is clear that "over"-molding with respect to base 160, more generally contact part 156 or connector 104, implies covering surfaces of (portions of) base 160, such as the upper surfaces 212 of steps 213 directed "away" from the label 102, and this is in contrast to, for example, any gluing of base 160 to label 102, for example by means of the adhesive foils 124 depicted in Fig. 1(b), from which it is clear that gluing is performed "between" base 160 and panel 102, or at most some glue may cover sides or edges of base 160, but for gluing base 160 to label 102 it would not make sense to cover, for example, surfaces 212 thereof with glue.

Overmolding label 102 and base 160 with increasingly thicker layers of mold material 200 would result in contact part 156 becoming increasingly embedded within mold material 200, however this may also require measures to avoid formation of bubbles or cavities between mold material 200 and contact part 156, such as increasing an injection pressure of the mold material in an injection mold tool, decreasing a viscosity of the mold material 160 by increasing its temperature, etc. where such measures may require follow-up measures such as fixing the PV label 102 and/or the connector 104, etc., and this may result in increased process complexity, higher costs, etc.

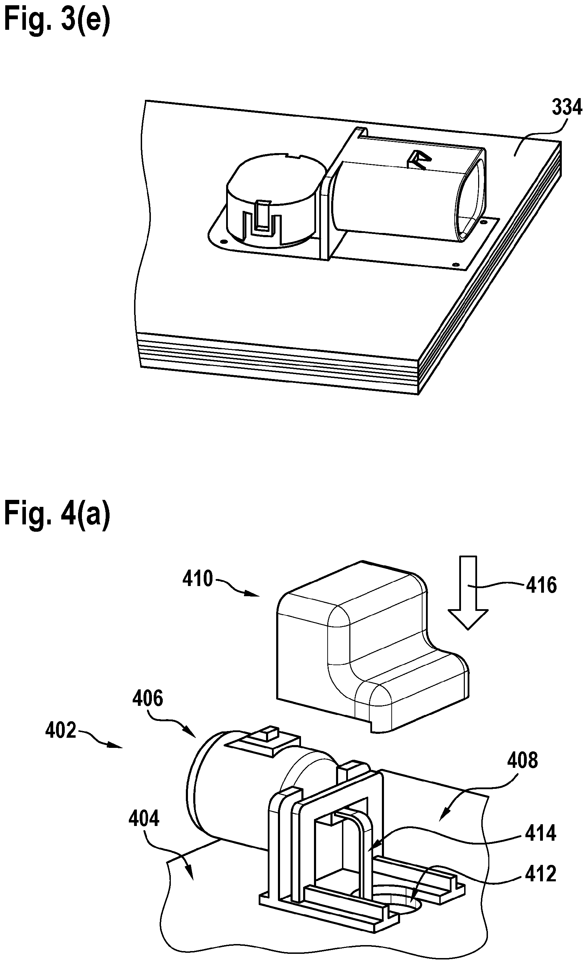

Similar considerations hold for still another (preferably, overmolding) option wherein the mold material 200 is applied in a layer 208 up to a height such that the mold material 200 reaches the protective cover 164. As illustrated in Fig. 1(c), an undercut 210 may be formed by base 160 and cover 164 to be filled by the mold material 200, however such structure may require relatively high injection pressure, low viscosities of the applied mold material 200, etc. It is to be understood that according to this option no sealing or potting may be needed, while on the other hand a serviceability of the contact point 118 is not possible This in mind, the option 208 is taken further in the embodiment illustrated in Figs. 4(a)-(c).

Generally for the options 201-208 it is noted that a desirable improved attachment of the connector 104 may require selecting a suitable material for the involved portion or portions of the contact part 156 (and optionally the protective cover 164); for example, the material may need to be suitable for thermal fusion, cross-linking with the mold material 200 during solidification, etc., while functions of protrusion 166, protective cover 164, etc. should not be deteriorated. Again, surface properties of the involved portions of the contact part 156 and/or protective cover 156 should be such as to minimize the risk that cavities form when the mold material 200 is applied, e.g., is filled into a mold.

Further with reference to Fig. 1(c), the mold material 200 applied according to any of the options discussed hereinabove is then brought to solidification to provide an attachment structure which attaches the connector 104 to the PV label 102, and preferably simultaneously provide a support structure which supports the PV label 102.

Solidification should be accomplished to at least a state where the mold material is sufficiently stable and preferably self-supporting such that the PV label with attached connector can be removed from a mold tool.

The mold material can be a mixture of two or more components wherein the components are adapted such that, upon being mixed with each other, a chemical reaction is initiated which results in a successive solidification of the mixture. In other words, upon being mixed, the components may cure and solidify due to chemical reactions. However, initially, i.e. directly after having been mixed, the mixture of the components is fluid and may therefore be applied and spread along a surface of the PV label, including the contact area where the connector is placed.

For example, a mold material such as a thermosetting polymer can be based, e.g., on a two-component polyurethane system. For example, the thermosetting polymer can be a mixture of polyol and isocyanate.

Alternatively, a mold material or thermosetting polymer can comprise only one component and can be configured to cure and solidify upon energy being induced into the polymer. For example, such energy may be induced by heating the polymer beyond a specific curing temperature and/or by irradiating the polymer with energetic radiation such as UV-radiation.

While not explicitly shown in Figs. 1(a)-(c), at least part of the processing can be performed by within a mold tool or mould. For example, a final shape of the support structure for the PV label 102 and/or the attachment structure for the connector 104 can be defined by the mould having a surface with a shape being complementary to the intended shape of the support structure and/or the attachment structure. Specifically, the mold may have a cavity, an inner surface of such cavity corresponding to the intended shape of the support structure.

Accordingly, the PV label 102 can be arranged in the cavity and the connector 104 placed on the PV label 102. Alternatively, the connector 104 is placed on the PV label 102 and the PV label with the already placed connector is arranged in the cavity. Thereafter, the remaining volume of the cavity is filled with the mold material 200 such as according to any one or more of the options 202-208 discussed with reference to Fig. 1(c) and preferably implementing thereby any of the overmolding approaches as discussed herein. Additionally or alternatively, the mold may have a surface with the intended shape and may be pressed onto the mold material which has been applied to the PV label and the connector in a preceding processing step, thereby forming and shaping the mold material.

According to a specific embodiment, the mould can comprise two moulding portions, wherein the PV label, when being in a first geometry, is arranged between the two moulding portions and the two moulding portions are then pressed together thereby plastically deforming the photovoltaic label into a second geometry. The PV label may initially be produced with its first geometry being planar, and then the connector is placed. The planar PV label with placed connector may then be introduced into the opened mould and may be arranged between the two moulding portions. Subsequently, the mould may be closed and the two moulding portions may be moved towards each other, thereby pressing onto the interposed PV label with placed connector and deforming it into a nonplanar second geometry. This second geometry corresponds at least to a certain degree to the curved geometry of the intended PV panel. Preferably, the PV label is deformed plastically in such pressing action. This may preferably be achieved by heating the PV label to an elevated temperature.

It is to be noted that a PV label as such is generally flexible or bendable and is not sufficiently self-supporting for many applications. Accordingly, the PV label generally has to be reinforced by a support structure having higher mechanical stability than the PV label. In contrast to a conventional planar-shaped PV module, a PV car body panel may generally have a complex three-dimensional shape, and therefore a mould as outlined above can be used for achieving an accordingly shaped support structure and PV label.

Moreover, it is to be understood that a single process such as that depicted in Figs. 1(a)-(c) comprises attaching the connector 104 to the PV label 102 and simultaneously comprises providing a support structure for the PV label 102. More specifically, according to the process of providing an attachment structure for the PV label 102, the mold material 200 is applied to the rear surface 116 of the PV label 102, specifically the contact area 120. According to a process of providing a support structure for the PV label 102, the mold material 200 is also applied to the rear surface 116 of the PV label 102, but typically to larger portions thereof, i.e. portions which are or extend at least partly outside the contact area 120. For example, the mold material may spread over an entire rear surface of the PV label. Common aspects of said single process therefore comprise use of a common mould, a common mold material, and/or common process steps such as, for example, applying the mold material, preferably including overmolding the rear surface 116 of PV label and parts or portions of the connector 104, and/or solidifying the applied mold material.

One and the same mold material may be used for simultaneously providing the support structure and the attachment structure, and insofar a mold material may for example be selected proper for the support structure, it may be worth considering that the material of the connector, more specifically the contact part and still more specifically the base thereof, and/or any further parts thereof which are intended to come into contact with the mold material, such as the protective cover, may be made of a suitable material. Generally, the connector may itself be a molded component, for example be produced by an injection molding process, and it may therefore be considerable that the connector or parts thereof be made from a mold material, such as a thermoplastic material, which is suitable for overmolding, i.e., when providing the attachment structure the according parts become overmolded.

For attaching the connector to the PV label, a material of, e.g., the base of the connector may preferably be suited for thermal fusion with the applied mold material and/or the material of the PV label, specifically, the contact area thereof. Thermal fusion or heat fusion is understood herein as a processing or mechanism which joins materials such as thermoplastics together. Thermal fusion may be achieved by bringing materials at least at a touching point or area thereof into an at least partially melted state. This may allow, for example, polymer chains to join together as the connection cools for a permanent bond, ideally as if they were manufactured as one piece.

For example, when sufficient heat is applied in the scenario of Fig. 1(c), the mold material 200 and material of the base 160 of the connector 104 may become viscous and/or sticky. Accordingly, upon such temporary application of heat, the materials join or mechanically interconnect with each other (and/or with the backside foil 112 of the PV label 102). As a result, the mold material 200 forming the attachment structure and/or the support structure for the PV label integrally joins with the base 160 of the connector, and optionally further parts such as the protective cover 164.

For strong mechanical connection, extended joining areas may be preferred where thermal fusion should occur. With regard to the various options or scenarios 202-208 schematically depicted in Fig. 1(c) and the effects of thermal fusion of base 160 and mold material 200, it is to be noted that if it is the layer 202 which forms simultaneously or in one the support structure and the attachment structure, a large footprint of base 160 on the contact area 120 implies a long circumference line of base 160 which provides for an accordingly extended contact area with the mold material 200 (also depending on the thickness or depth of layer or structure 202 on the PV label 102). A complex perimeter or circumferential line may further add to said contact area, however this has to be balanced with the problem that gaps and cavities may form between mold material 200 and base 160.

Layers or structures 204 or 206 of mold material 200, preferably formed by overmolding base 160 and neighboring or adjacent portions of label 102, cover not only edges and side walls of base 160, but cover also upper surfaces 212 (away from the PV label 102) of base 160, for example surfaces 212 can be defined by steps 213 of base 160, and in this way an embedment of base 160 can be controlled and robustness and rigidity of the attachment be further improved. Layer or structure 208 preferably also resulting from overmolding, has a still larger contact area with base 160 and further parts of contact part 156. In case the integral attachment / support structure 208 is joined with the protective cover 164, this may add to a robust and rigid attachment, and may additionally serve to seal the contact point 118.

Further to a desirable extension of base 160 on the PV label 102, Fig. 1 (c) schematically shows an extension or diameter 214 indicating a size of exposed contact point 118 in terms of a size of the opening in rearward foil / backsheet 116 of PV label 102. The diameter 214 may be the diameter of an approximately circular opening, a side or a diagonal of an approximately square or rectangular opening, etc. A diameter 216 indicates in a similar way a size or extension of base 160 (its footprint) on contact area 120 when measured along a same line as diameter 214.

A "small" base may be understood for sake of discussion as having an extension or diameter 216 on the contact area which is comparable to the size or diameter 214 of the contact point, in the sense that diameter 216 of the base is less than 10 times the diameter 214 of the contact point, preferably less than 5 times, more preferably less than 3 times, most preferably less than 2 times. Accordingly, a "large" or "extended" base is a base where its size or footprint on the contact area is larger than that of a "small" base.

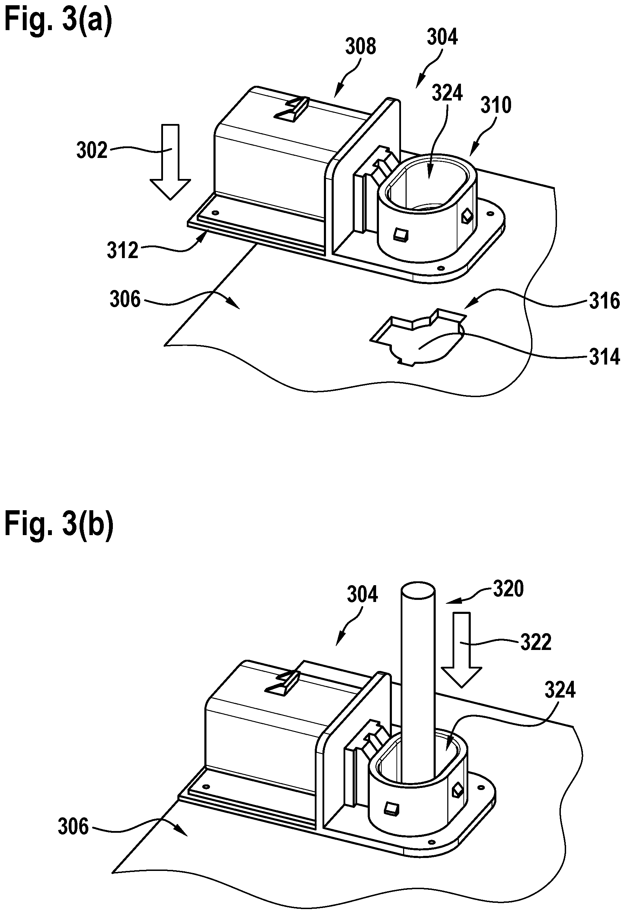

Accordingly, the base 160 as illustrated in Fig. 1(c) is a 'small' base. However, a "large" or "extended" base such as an extended base plate which covers a relatively large contact area on the PV label may achieve a more robust and reliable attachment of the connector. With reference to the perspective views of Figs. 3(a)-(e), an embodiment of a process 300 of providing a support structure for and attaching a connector 304 to a PV label 306 will now be discussed, where the connector has a "large" base 312. The connector 304 may be similar to connector 104 as shown in Fig. 2 except for the extended base plate 312 as discussed below.

Specifically, Fig. 3(a) illustrates placing 302 the connector 304 on PV label 306. The connector 304 comprises a connection part 308 for connecting to an automotive wiring and a contact part 310 for contacting the PV label 306 via extended base plate 312. PV label 306 comprises a contact point 314 such as being provided by a cut-out 316 in backsheet 318 of PV label 306.

Placing 302 the connector 304 on the contact point 314 can comprise correctly positioning the contact part 310 such that pins etc. thereof match with the complementary complex contour of cut-out 316, as illustrated in Fig. 3(a). When connector 304 is placed, a contact tab (not shown) of connector 304 may reach through to copper contact point 314.

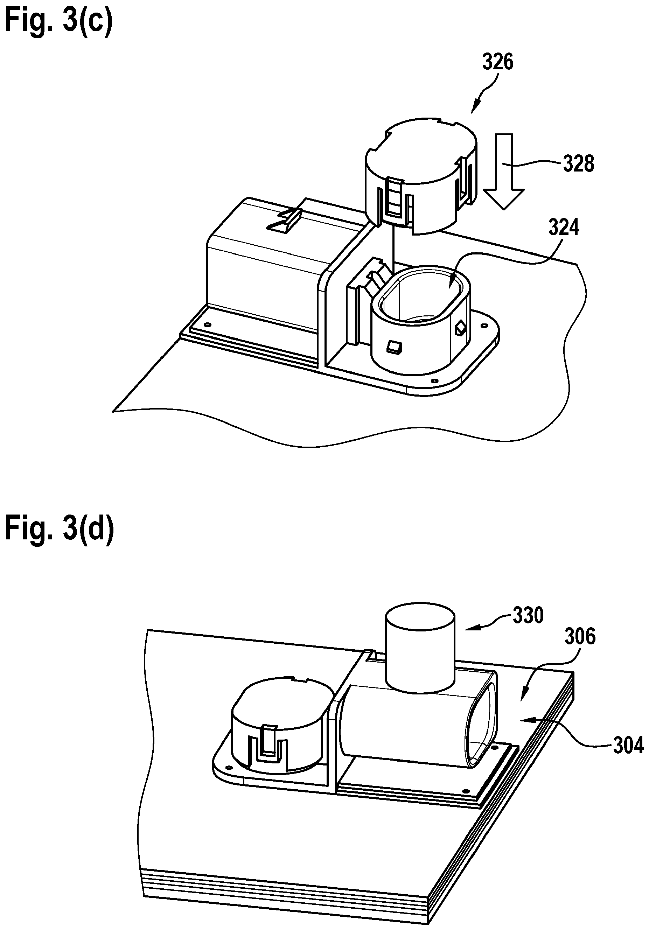

Fig. 3(b) shows connector 304 placed and positioned on PV label 306. A welding tool 320 operates 322 via a through-hole 324 of contact part 310 to solder the contact tab of connector 304 to contact point 314. As illustrated further in Fig. 3(c), subsequent to the soldering, a protective cover 326 is put 328 on the opening 324 for closing thereof, to thereby protect the contact point 314. For example, cover 326 and contact part 310 may be configured for a snapping or snap-fit connection.

Fig. 3(d) shows PV label 306 and connector 304 placed thereupon as may be provided into a mould, for example an injection mould. A tool 330, such as a vacuum suction cup, can be used to keep the connector 304 in place. Fig. 3(e) illustrates applying mold material 334 to PV label 306 which includes overmolding parts of connector 304. Specifically, edges and steps of single- or multi-stepped parts of extended base plate 312 are overmolded in a way similar to what has been discussed with reference to Figs. 1(b) and (c). By solidifying mold material 334, a structure is achieved which functions in one as a support structure for mechanically supporting the PV label 306 and as an attachment structure for attaching the connector 304 to the label 306 (or integrating the connector 304 in the panel).

As discussed, base plate 312 extending considerably further along one or more directions away from contact point 314 can provide for an improved attachment of connector 304 to PV label 306 resp. the finalized PV panel in terms of increased rigidity, robustness and/or reliability when compared to a base with smaller footprint such as base 160 of Fig. 2. Specifically, base 312 extends preferably below connection part 308, where it is noted that connection part 308 is spaced apart from base 312 in order to allow connection to a connector of a vehicle wiring, for example. Such configuration can be preferable in order that neighbouring parts of the backside structure of the PV panel be available for other uses, such as labels indicating properties of the PV panel, connector, etc.

Other embodiments can be contemplated that comprise the use of a connector with an even larger or more extended base, i.e., with an even larger footprint. However, while not illustrated in the figures for reasons of clearly illustrating the process of providing support structure and attachment structure, it is to be noted that the PV panels to be produced are generally three-dimensional in shape, for example in case the PV panels are intended for use as vehicle body panels. A three-dimensional shape implies at least generally that the front-side surface and in particular the back-side surface of the PV panel, where the connector will typically be attached, are curved. In order to avoid gaps between the connector and the back sheet of the PV label, the size of the connector, more specifically the footprint thereof on the PV label, should be small and this conflicts with the approach of providing a large or extended base for robust attachment.

In some cases it may be possible to solve this conflict by arranging the base of the connector in a flat surface portion of the PV panel. This may not in general be possible due to requirements such as where preferably to connect to the vehicle wiring etc.

Additionally, a limited curvature of the PV label may be tolerable. For example, referring to Figs. 1(b) and (c), a gap being considerably narrower than a thickness of the layer 202 (or any of the layers 204, 206 and 208) of mold material 200, more specifically a thickness of the resulting attachment structure may said to be within tolerances. Vice versa, the thickness of the mold material layer may even be selected accordingly, such as larger thickness may be considered for larger corresponding gap tolerances in case of more pronounced curvature of the PV panel / label. However, this has to be balanced in view of potential disadvantages such as more mold material be required, higher weight, longer processing times, etc.

Still further measures can be contemplated such as providing a connector with a base plate having a curved shape for being placed on a correspondingly curved surface of the PV label. Such connector may however have limited applicability and a set of connectors adapted to differently curved panels / labels may have to be provided. In an automotive environment the balance in terms of processing efficiency, costs, etc. would have to be considered. According to another approach, a base plate or frame can be contemplated which has predetermined breaking points or lines. A single such connector may in this way be adapted to different panel / label curvatures, however, it has to be considered whether providing multiple breaking lines in the base may deteriorate its stability, and also the mounting process may become more complex.

Another approach of achieving improved robustness of an attachment structure for a connector, which is particularly applicable for PV panels with curved backside surfaces will now be described with reference to Figs. 4(a)-(c) which illustrate an embodiment of a process 400 of attaching a connector 402 to a PV label 404.

Connector 402 comprises connection part 406 and contact part 408. It is to be noted that contact part 408 has a "small" base plate or frame 409 in the sense as discussed further above. Moreover, contact part 408 is specifically configured for accepting a protective cover 410 such as, for example, by form fitting which may enable particularly simple access for example for soldering or welding contact tab 414 of contact part 408 to contact point 412 of PV label 404.

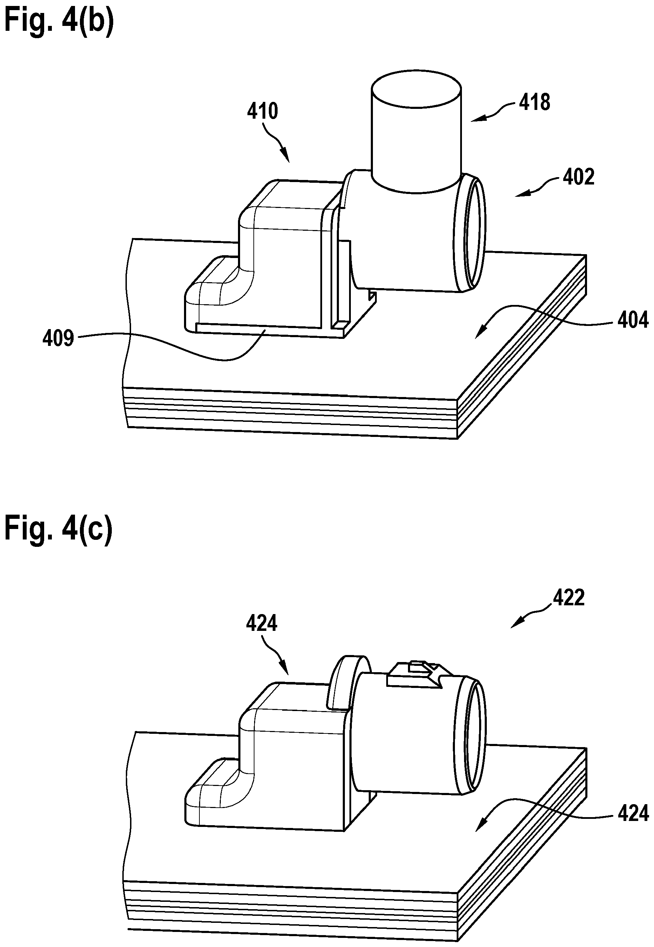

Fig. 4(a) illustrates a process step 416 of protecting tab 414, contact point 412 and the connection thereof by fitting the cover 410 to contact part 408. Fig. 4(b) illustrates PV label 404 with connector 402 being placed thereupon and kept in position by a suction cup 418 to be entered into a mold tool.

Fig. 4(c) illustrates simultaneous overmolding of PV label 404 and connector 402 to thereby produce a (backside structure of) PV panel 422. Specifically, mold material 424 is applied to PV label 404 including edges and steps, if present, of small base plate 409. Moreover, the entire protective cover 410 as fitted to contact part 408 is also overmolded with the same mold material 424 as the backside of label 404, and this implies that, for example by means of thermal fusion and subsequent solidification of mold material 424, an attachment structure for attaching the connector 402 is achieved which is integrally joined with a support structure for mechanically supporting label 404 and preferably with large surface areas of connector 402, specifically the entire contact part 408 including cover 410.

An overmolding as demonstrated in Fig. 4(c) can result in an optimized sealing of the electrical connection and furthermore can achieve a strong attachment, e.g., in terms of stiffness, of the connector. It is again noted that such robust attachment can be achieved with a small base plate 409 as compared, for example, to the exemplary embodiment of Figs. 3(a)-(e) with its extended base plate 312, which, on the other hand, by means of its removable cover 326 allows continued access to the electrical connection, such as for inspection purposes.

Various alternative embodiments can be contemplated. For example, instead of overmolding the connector, i.e., the contact part and/or protective cover thereof as in Fig. 4(c), it can be contemplated that the connector is not provided as a separate part but is molded in one step with overmolding the PV label. Another embodiment comprises a PV label not provisioned with a fixed connector at all. Instead, a cable is directly soldered or welded to the contact point. A connector provided at the other end of the cable is configured for connection to a wiring harness. The contact point including its connection to the cable is directly overmolded. The cable may be configured for thermal fusion with the mold material.

It is to be noted that when referring to molding or overmolding processes herein, various details are omitted for sake of conciseness. As but one example, a primer may be applied, for example, to a backsheet surface of a PV label and/or a connector, such as a base and/or a protective cover thererof, before applying a mold material for achieving optimized adhesion between the solidified mold material, the PV label and/or the connector.

While various embodiments described herein allow a robust and reliable attachment of a connector to a PV label by molding or overmolding, preferably simultaneously to providing the PV label with a support structure, this does not exclude additional measures for improvement of stability and reliability of the connector attachment, such as, for example, gluing or ultrasonic welding of the connector, preferably of a base of the contact part or a portion thereof, to the PV label.

Various embodiments described herein relate to producing PV panels, particularly, but not exclusively, PV vehicle body panels, which may be obtained, for example, by embedding PV labels into body panels. An electrical connection is then to be established between the body panel and a wiring harness of the vehicle. Automotive manufacturing processes typically require a pluggable connection, e.g., for optimized cycle times in a production line. The wiring harness offers a pre-assembled standard connector for mating. The female or male connector or plug needs to mate with a male or female socket on the PV body panel side.

Various embodiments propose that this socket, header, or connector is mounted or attached to a backsheet of a PV label by molding or overmolding (the term "molding" as used herein is generally intended to include "molding" and "overmolding" unless explicitly stated otherwise).

Preferred embodiments further propose that such molding of the attachment structure for attaching the connector is performed in one step or simultaneously with a molding of a support structure for mechanically supporting the PV label, where the latter may be understood as an essential part of a process for producing a PV car body panel. In other words, a step or process of attaching the connector can be considered to be performed in one step, i.e., integrated or embedded within the process of providing a support structure.

From still another, complementary perspective, it is proposed to integrate the attachment of the connector and the provisioning of a support structure for the PV label within a general (one and the same) process of providing (at least a backside structure of) the PV car body panel. Accordingly such process may comprise a single mould process wherein the PV label with the connector placed thereupon is inserted, for example, into a mould tool. A mold material is then applied to the backside of the label such as to encompass at least portions of the connector, such as edges and optionally surfaces of its base, or even parts protruding further from the PV label such as a protection cover, preferably by overmolding the backside of the label and the connector in one step, using one and the same mold material. The mold material is then solidified to obtain a single integrated structure which functions as a backside structure for the PV panel, such as a support structure for supporting the PV label, and at the same time as an attachment structure for attaching the connector. For example, a solidified thermosetting or thermoplastic polymer may provide a support structure for the PV label which provides mechanical stability to the PV label, and at the same time attaches the connector to the PV panel.

Various embodiments enable a mechanically rigid attachment of the connector to the PV label and/or integration of the connector into the PV panel, wherein the attachment is robust against vibrations and other types of mechanical stress typical for an automotive or driving environment. For example, the connector can be of relatively low weight and/or requires a relatively low number of parts or pieces, for example compared to attachments using screws and/or cables. In particular, embodiments of the present disclosure require a low number of metal parts compared to, e.g., screw-based approaches. Embodiments can provide for a reliable or long-lasting attachment when, for example, no loosening of screws can occur.

Embodiments propose various connector design options and use thereof in connector attachment to achieve mechanical rigidity, robustness, stiffness etc. For example, such options can comprise a design of a base plate or frame of a contact part of the connector in terms of footprint, contour line on the PV label, stepped design, etc., where a molding or overmolding of such design may comprise an overmolding of edges and surfaces, but may also comprise an overmolding of at least portions of further structures of the connector, such as of a cover provided for protecting a welding or soldering port (generally a through-hole) and/or inspection port. It is noted that embodiments which provide for a particularly reliable electrical joint or connection, e.g., due to a direct soldering or welding of the at least one contact tab of the connector to the copper layer of the PV label, may not require an inspection or servicing port during expected lifetime and an according cover may therefore be overmolded after soldering or welding for an optimized mechanical attachment (and further sealing of the electrical connection).

The present disclosure is concerned, amongst others, with producing PV panels with connectors for use as body panels in vehicles, and in view of general requirements for automotive processing, various approaches are discussed herein how such panels can be produced with limited processing complexity.

Various proposed embodiments require a minimum number of parts for providing electrical connectivity to a PV panel: Instead of, for example, three connectors interconnected with cables, a single connector attached to the PV panel is provided without the need for any cable. This contributes to minimizing processing complexity and/or minimizes a packaging space needed, e.g., at the backside of the PV panel.

Embodiments enable that the one or more electrical conductors can be pre-assembled and/or integrated within the connector, which further contributes to minimizing complexity. The electrical joint or connection can be provided by direct soldering or welding, for example, of one or more contact tabs of the connector to a contact point or points of the PV label, and there are no further electrical connections to be established during manufacture of the PV panel. As the number of electrical joints or connections is minimized, so is the number of sources of potential failures.

Further from a process view, if the connector attachment is integrated within the process for producing the backside structure of the PV panel, there is no need for separate processing, prior or after, for the connector attachment. Conventionally, such processing may comprise complex measures including, for example, assembling a tab at the contact point of the PV label, gluing a socket to the backside of the PV panel, providing for a connection, such as by screws, between the tab and a conductor in the socket, providing further electrical connections, such as by further screws and cables, to the external of the socket, such as to an external connecting part for mating with a connector of the car wiring, etc. In contrast, embodiments of the present disclosure do, for example, not require a tab to be pre-assembled at the PV label; only a blank contact point has to be prepared. Embodiments also do not require screws and/or cables to be handled with, or multiple connectors.

According to embodiments, at least a base of the connector can be integrated within the molded backside structure of the PV panel, so there is no need for process steps of gluing the connector to a backside structure, notwithstanding that gluing can be considered for pre-fixing the connector to the PV label prior to molding, or for a maximum strength of the attachment.

Overmolding the PV label and the connector in one step for providing an integrated, continuous structure serving in one for supporting the PV label and attaching the connector is a particularly efficient implementation of a manufacturing process for a PV panel. As according to various embodiments such processing requires a minimum of steps and/or a minimum of parts, the cycle times can also be accordingly minimized, and corresponding cost savings can be realized.

Finally, it should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

### LIST OF REFERENCE SIGNS

- 102: PV label
- 104: connector
- 106: attachment structure
- 108: solar cell arrangement
- 110: front side foil
- 112: back side foil
- 114: front side of PV label / panel
- 116: back side of PV label / panel
- 118: exposed contact
- 120: contact area
- 122: surrounding surface area
- 124: adhesive foil
- 152: housing
- 154: contact tab
- 156: contact part
- 158: connection part
- 160: base
- 162: through-hole
- 164: protection cover
- 166: protrusion
- 168: sealing material
- 170: potting material
- 172: single-stepped base
- 174: multi-stepped base
- 176: rearward surface of PV plane
- 200: mold material
- 202, 204, 206, 208: application of mold in a layer of 1st height to the surface
- 210: undercut
- 212: upper surface
- 213: step
- 214: diameter of contact point
- 216: diameter of contact area / base
- 300: process
- 302: process step
- 304: connector
- 306: PV label
- 308: connection part
- 310: contact part
- 312: extended base plate
- 314: contact point
- 316: cutout
- 318: backsheet
- 320: welding tool
- 322: process step
- 324: through-hole
- 326: protective cover
- 330: fixation tool
- 334: mold material
- 400: process
- 402: connector
- 404: PV label
- 406: connection part
- 408: contact part
- 409: base
- 410: protective cover
- 412: contact point
- 414: contact tab
- 416: process step
- 418: suction cup
- 420: process step
- 422: PV panel
- 424: mold material

## Claims

1. A method for producing a photovoltaic, PV, panel (102), comprising:
providing a PV label (102) comprising a solar cell arrangement (108) enclosed by polymeric foils (110, 112),
placing a connector (104) on the PV label (102), the connector (104) being configured for electrically connecting the PV label (102) and a wiring, preferably a wiring harness of a vehicle,
providing an attachment structure for attaching the connector (104) to the PV label (102), wherein the attachment structure is provided by
applying a mold material (200) to the PV label (102) and the connector (104) placed on the PV label (102) such that at least portions of the PV label (102) neighbouring the connector (104) as well as portions of the connector (104) are overmolded with the mold material (200), and
solidifying the mold material (200).

2. The method according to claim 1,
wherein placing the connector (104) on the PV label (102) comprises placing a contact part (156) of the connector (104) on a contact area (120) of the PV label (102), the contact area (120) comprising an exposed electrically conducting contact point (118) of the solar cell arrangement (108), and the method further comprising:
electrically connecting at least one conducting tab (154) of the contact part (156) of the connector (104) to the contact point (118).

3. The method according to claim 1 or 2,
wherein placing the connector (304) on the PV label (306) comprises positioning the connector (304) based on one or more positioning portions (316) provided at the contact part (310) and/or the PV label (306).

4. The method according to any one of the preceding claims, further comprising:
providing a cover (164) for protecting the electrical connection between the PV label (102) and the connector (104).

5. The method according to any one of the preceding claims,
wherein a fixation tool (330, 418) is used for keeping the connector in place.

6. The method according to any one of the preceding claims,
wherein overmolding the connector (104) comprises overmolding a step or steps (213) of the connector (104).

7. The method according to claim 4,
wherein overmolding the connector (104) comprises overmolding the protective cover (164).

8. The method according to any one of the preceding claims,
wherein solidifying the mold material comprises thermal fusion of the mold material and a material of the connector.

9. The method according to any one of the preceding claims,
wherein the step of providing an attachment structure for attaching a connector (104) is performed in one step together with a step of providing a support structure for mechanically supporting the PV label (102).

10. The method according to claim 9,
wherein the step of providing the support structure in one step with providing the attachment structure comprises:
overmolding the PV label and the connector placed on the PV label by applying a thermoplastic or thermosetting polymer, and
solidifying the thermoplastic or thermosetting polymer.

11. The method according to claim 10, further comprising:
shaping the PV label, using a mold tool, into a desired three-dimensional shape, and
upon solidifying the thermoplastic or thermosetting polymer, removing the structure formed upon solidifying the thermoplastic or thermosetting polymer together with the PV label and the connector from the mold tool, to thereby provide the PV panel with attached connector.

12. A photovoltaic, PV, panel (422), comprising:
a PV label (404) comprising a solar cell arrangement enclosed by polymeric foils,
a connector (402) placed on the PV label (404), the connector (402) being configured for electrically connecting the PV panel (422) and a wiring, and
a structure (424) made by overmolding at least portions of the PV label (404) neighbouring the connector (402) as well as portions of the connector (104) with a thermoplastic or thermosetting polymer and solidifying the thermoplastic or thermosetting polymer, the structure serving in one as a support structure for mechanically supporting the PV label (404) and as an attachment structure for attaching the connector (402) to the PV label (404).

13. The PV panel according to claim 12,
wherein the PV panel is a vehicle body panel having a three-dimensionally curved shape.

14. The PV panel according to claim 12 or 13,
wherein the PV panel is produced by the method according to any one of claims 1 to 11.
